# EUROPEAN PATENT APPLICATION

(11) **EP 1 998 530 A2**
(43) Date of publication of application: **03.12.2008**
(21) Application number: 08157116.8
(22) Date of filing: 28.05.2008
(51) Int. Cl.: H04L 29/06

(54) **Method and apparatus for controlling device through web-based service**

(30) Priority: 01.06.2007 KR 20070053983
(71) Applicant: Samsung Electronics Co., Ltd., Suwon-si, Gyeonggi-do 442-742 (KR)
(72) Inventor: Zhang, Guanhua, Yeongtong-gu, Suwon-si, Gyeonggi-do (KR)
(74) Representative: Robinson, Ian Michael

(57) **Abstract**

A method and apparatus for controlling a device through a web-based service is provided. The apparatus includes a control module (520) which determines whether a user is authorized to access a control server via a terminal of the user based on information received from the terminal, and transmits an authentication token to the terminal if it is determined that the user is authorized to access the control server; and an output module (540) which receives a request message for controlling a device along with the authentication token from the terminal, the request message being transmitted via a third party application by the terminal, and transmits the request message to the device if the authentication token received from the terminal is valid.

## Description

### BACKGROUND OF THE INVENTION

### 1. Field of the Invention

Methods and apparatuses consistent with the present invention relate controlling a device through a web-based service, and, more particularly, to controlling a device through a web-based service that controls or manages a device using a third party application.

### 2. Description of the Related Art

Multimedia data comes in various forms such as text, still images, moving images, animation, sounds, and others. In recent years, research has been conducted on ways to provide devices connected to an Internet server with multimedia content and web-based services.

It is often necessary for a user to control devices via an Internet server by using web-based services. In addition, it is also necessary to properly authenticate users, and thus allow only the authorized users to conveniently control devices.

### SUMMARY OF THE INVENTION

According to the present invention there is provided an apparatus and method as set forth in the appended claims. Other features of the invention will be apparent from the dependent claims, and the description which follows.

The present invention provides a method and apparatus for controlling a device through a web-based service which can conveniently and securely authenticate a device and can control or manage a device using a third party application.

According to an aspect of the present invention, there is provided an apparatus for controlling a device through a web-based service, the apparatus including: a control module which determines whether a user is authorized to access a control server based on user information input by the user, and transmits an authentication token to a terminal of the user if the user is authorized to access the control server; and an output module which receives a request message transmitted via a third party application by the terminal of the user and transmits the request message to a predetermined device according to whether the authentication token is valid, the request message being for controlling the predetermined device.

According to another aspect of the present invention, there is provided an apparatus for controlling a device through a web-based service, the apparatus including: a control module which determines whether a user is authorized to access a control server based on user information input by the user, and transmits an authentication token to a terminal of the user if the user is authorized to access the control server; and an installation module which installs a predetermined module in the terminal of the user and thus enables the user to automatically log on to the control server if the user is authorized to access the control server.

According to another aspect of the present invention, there is provided a method of controlling a device through a web-based service, the method including: determining whether a user is authorized to access a control server based on user information input by the user; transmitting an authentication token to a terminal of the user if the user is authorized to access the control server; and if a request message for controlling a predetermined device is transmitted via a third party application by the terminal of the user, transmitting the request message to the predetermined device according to whether the authentication token is valid.

### BRIEF DESCRIPTION OF THE DRAWINGS

The above and other aspects of the present invention will become apparent by describing in detail exemplary embodiments thereof with reference to the attached drawings, in which:
FIG. 1 illustrates the controlling of a device through a web-based service according to an exemplary embodiment of the present invention;
FIG. 2 illustrates the controlling of a device through a web-based service according to another exemplary embodiment of the present invention;
FIG. 3 illustrates a request message for controlling a device through a web-based service according to an exemplary embodiment of the present invention;
FIG. 4 illustrates device information included in an HTTP GET method according to an exemplary embodiment of the present invention; and
FIG. 5 is a block diagram of an apparatus for controlling a device through a web-based service according to an exemplary embodiment of the present invention.

### DETAILED DESCRIPTION OF THE EXEMPLARY EMBODIMENTS

The present invention will now be described more fully with reference to the accompanying drawings, in which exemplary embodiments of the invention are shown. The invention may, however, be embodied in many different forms and should not be construed as being limited to the exemplary embodiments set forth herein; rather, these exemplary embodiments are provided so that this disclosure will be thorough and complete, and will fully convey the concept of the invention to those skilled in the art. Like reference numerals in the drawings indicate like elements, and thus a repetition of their description has been omitted.

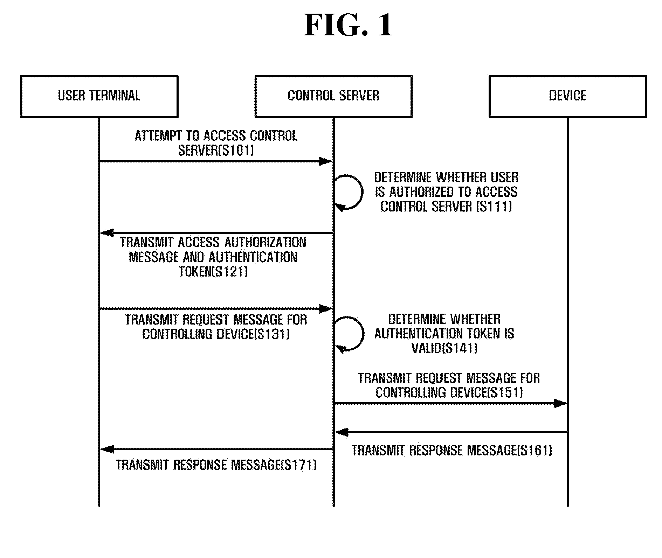

FIG. 1 illustrates the controlling of a device through a web-based service according to an exemplary embodiment of the present invention. Referring to FIG. 1, information regarding a plurality of devices that are connected to a control server via a wired or wireless network and information regarding a user (hereinafter, referred to as the user information) are registered in the control server. The user information may be information that has been input to the control server via a subscriber registration procedure. The user information may include at least one of an identifier and a password used by the user, a name of the user, and a lot number and a unique number of a terminal of the user. The devices may register themselves with the control server which uses a unique identifier such as a unique code of the manufacturer of the control server, and may be connected to the control server via a network using the Hypertext Transfer Protocol (HTTP). The devices may transmit availability status information to the control server at regular time intervals using Simple Object Access Protocol (SOAP) messages. Then, the control server transmits a response message to each of the devices upon receiving SOAP messages transmitted by a corresponding device. SOAP may use a Remote Procedure Call (RPC) mechanism when a communication protocol such as HTTP is used in a distributed environment.

The user may control and manage the devices using a web-based service. Examples of the devices include consumer electronics (CE) devices. The devices may be connected to the control server via the Internet, and may thus continually update their functions. A method of controlling a device using a web-based service will hereinafter be described in detail.

In operation S101, the user attempts to access the control server via a user terminal. In operation S111, the control server determines whether the user is authorized to access the control server by providing an access authorization page to the user terminal. Specifically, if the user inputs an identifier and a password to the access authorization page provided to the user terminal by the control server, the control server may determine whether the user has a legitimate access right based on the identifier and the password input by the user. That is, if the user inputs user information (i.e., an identifier and a password used by the user) to the access authorization page provided to the user terminal by the control server, the control server may analyze the user information and determine whether the user has a legitimate access right based on the result of the analysis.

In operation S121, if the control server determines that the user is authorized to access the control server, the control server transmits both a message indicating that the user is allowed to access the control server and an authentication token to the user terminal. If the control server determines that the user is not authorized to access the control server, the control server may transmit to the user terminal a message indicating that the user is not allowed to access the control server.

A third party application for controlling the devices that are connected to the control server via a network may be provided to the user terminal. The user terminal may be provided with a URL of the third party application that is redirected after the transmission of the authentication token to the user terminal. Either a web page or a predetermined application may be included in the third party application.

In operation S131, the user terminal transmits a request message for controlling a device to the control server using the third party application. The user terminal may transmit the authentication token to the control server along with the request message.

In operation S141, the control server determines whether the authentication token is valid. In operation S151, if the control server determines that the authentication token is valid, the control server transmits the request message to a device that is the target of the request message. Then, the device may perform a predetermined operation upon receiving the request message, and transmit a response message regarding the result of the predetermined operation to the control server.

In operations S161 and S171, the control server receives the response message and transmits the response message to the user terminal.

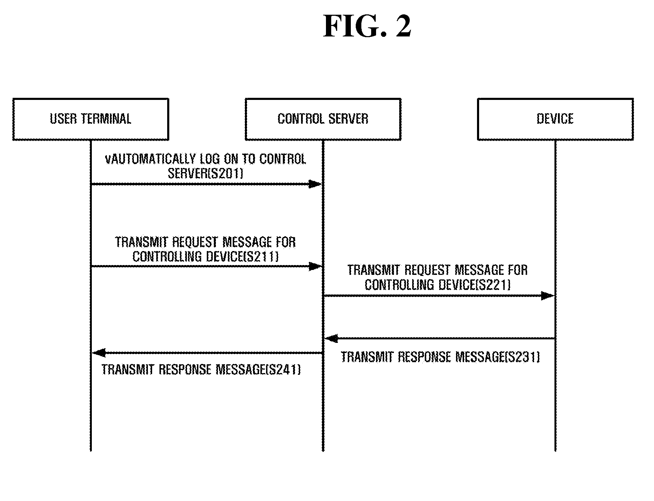

The terminal of the user may be connected to the control server via the Internet in a wired or wireless manner. Examples of the user terminal include a personal computer (PC), a personal digital assistant (PDA), a personal communication system (PCS), and a mobile phone. The authentication of the user based on user information input by the user may be complicated. Therefore, if the user has been successfully authorized to access the control server and the user terminal has already received an authentication token transmitted by the control server, a predetermined module may be installed in the user terminal so that the user can automatically log on to the control server upon accessing the control server. This will be described hereinafter in further detail with reference to FIG. 2.

FIG. 2 illustrates the controlling of a device through a web-based service according to another exemplary embodiment of the present invention. Referring to FIG. 2, assume that a user has already been authorized to access a control server using the user terminal which has already received an authentication token transmitted by the control server. A predetermined module may be installed in the user terminal by the control server. The predetermined module enables the user to automatically log on to the control server via the user terminal in operation S201.

In operation S201, when the user attempts to access the control server, the user automatically logs on to the control server due to the predetermined module. Specifically, the user terminal may transmit an authentication token to the control server, and the control server determines whether the authentication token is valid. If the control server determines that the authentication token is valid, the user may be allowed to automatically log on to the control server. As a result, the authentication of the user based on an identifier and a password input by the user, as performed in the method illustrated in FIG. 1 may be skipped, and, thus, it is possible for the user to readily access the control server with ease.

In operation S211, once the user logs on to the control server, the user terminal transmits a request message for controlling a device to the control server using a third party application provided to the user terminal. The third party application includes a web page or a predetermined application.

In operation S221, the control server transmits the request message to a device at which the request message is aimed. In operation S231, the device performs a predetermined operation and transmits a response message to the control server. In operation S241, the control server receives the response message and transmits the response message to the user terminal.

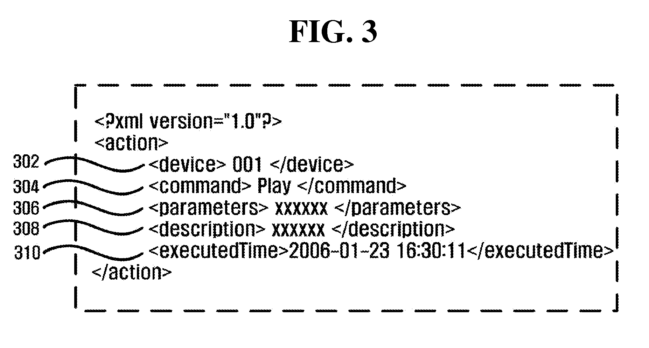

FIG. 3 illustrates a request message for controlling a device through a web-based service according to an exemplary embodiment of the present invention. Referring to FIG. 3, the request message may be written in a markup language. A user may issue a command to control or manage any desired device using a third party application (or a web page). For convenience of explanation, it will be assumed that the request message is written in the extensible Markup Language (XML). However, the present invention is not restricted to XML as the only form of the request message.

Information such as a unique number of a device, a command, a number of parameters, a description of a device and execution time may be included in respective corresponding XML tags, but the present invention is not restricted thereto. That is, various information, other than those set forth herein, may be included in XML tags in various manners.

Information included in an XML tag may be included in a request message, and the request message may be transmitted to a control server. That is, a user terminal may transmit a request message that is written in a markup language such as XML or the HyperText Markup Language (HTML) to the control server using a web page. The user terminal may also transmit an authentication token to the control server along with the request message. Then, the control server may transmit the request message to a device according to whether the authentication token is valid.

Referring to FIG. 3, a unique number tag 302 may include an identifier of a device and/or unique information that identifies the device. Specifically, the lot number and/or model number of the device may be specified in the unique number tag 302.

A command tag 304 may include a command regarding an operation to be performed in the device. Examples of the command include hardware and software control commands. Hardware control refers to the control of hardware elements of a device such as the turning on and off of a device and the adjustment of the temperature of a device. Software control refers to the control of software elements of a device such as the playback of moving image data, audio data, or video data, the termination of playback of moving image data, audio data, or video data and the scheduled recording of moving image data, audio data, or video data. However, the distinction between hardware control and software control is not restricted to that set forth herein since the hardware and software elements of a device may be controlled in association with each other by a predetermined module.

A parameter tag 306 may include one or more parameter values regarding the command specified in the command tag 304. The parameter tag 306 may also include various sub elements.

A description tag 308 may include descriptions of the values specified in the unique number tag 302, the command tag 304, and the parameter tag 306, respectively, or descriptions of other various pieces of information.

An execution time tag 310 may include execution time information specifying when to execute the command specified in the command tag 304. Therefore, a user may set up a schedule for the control of a device. Then, the device may be controlled in response to the command specified in the command tag 304 according to the schedule set up by the user.

A request message for controlling a device may be transmitted by an HTTP POST method, which is a standard HTTP method that can transmit a request message.

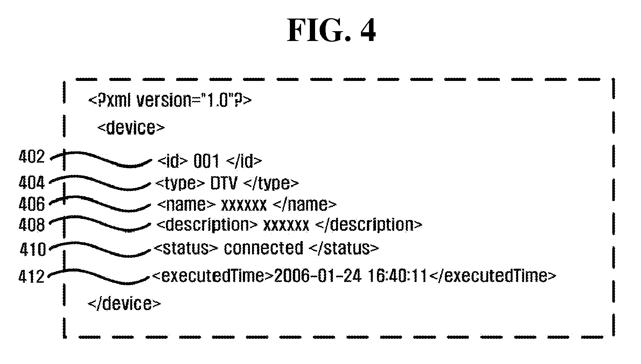

A request message for managing a device may be transmitted to a control server by an HTTP GET method, as illustrated in FIG. 4, and the control server may transmit the request message to a device. Then, the device performs a predetermined operation in response to the request message, and transmits a response message regarding the result of the predetermined operation to a user via a central server.

FIG. 4 illustrates device information included in an HTTP GET method according to an exemplary embodiment of the present invention. Referring to FIG. 4, an identifier, the type, the name, a description, and the status of a device and execution time information may be included in respective corresponding tags. Then, device information may be obtained according to the information included in the tags, respectively, and the obtained device information may be transmitted to a user. The HTTP GET method is a method for transmitting device information to a user for the management of a device. However, the present invention is not restricted to the HTTP GET method. That is, device information may be transmitted using a method, other than the HTTP GET method.

Referring to FIG. 4, an identifier tag 402 may include unique information regarding a device. The identifier tag 402 may correspond to the unique number tag 302 illustrated in FIG. 3.

A type tag 404 may specify the type of a device (for example, a digital TV). A name tag 406 may specify the model number of a device.

A description tag 408 may include a description of a device. A status tag 410 may indicate whether a device can be accessed. If a device can be accessed in a wired or wireless manner, the status tag 410 may be written as "connected."

An execution time tag 412 may include execution time information regarding when a device performs an operation corresponding to a predetermined command.

In short, when a request message, including information contained in a number of tags, respectively, is transmitted to a device via a control server by using the HTTP GET method, device information regarding the device cannot be obtained, and the obtained device information may be transmitted to a user.

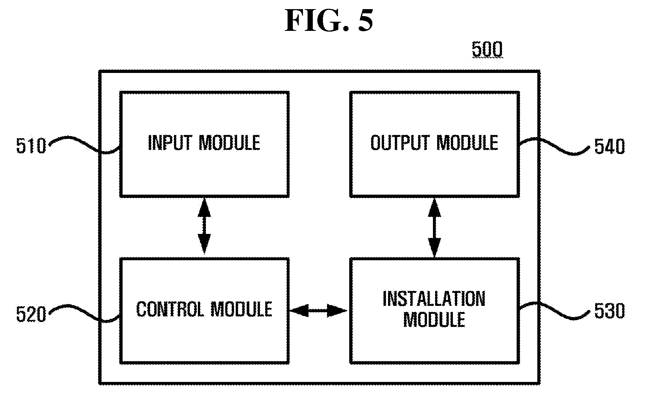

FIG. 5 is a block diagram of an apparatus 500 for controlling a device through a web-based service according to an exemplary embodiment of the present invention. Referring to FIG. 5, the apparatus 500 includes an input module 510, a control module 520, an installation module 530, and an output module 540. The apparatus 500 may be included in a control server.

The input module 510 receives user information from a user terminal. The user information may include an identifier and a password of the user. The user may input the user information to the input module 510 using various input devices, including a keyboard and a keypad, provided at the user terminal. In order to receive the user information from the user terminal, an access authorization page may be provided to the terminal. The access authorization page may be a web page provided by the control server when the user attempts to access the control server. The user terminal include a module equipped with an image display unit such as a cathode ray tube (CRT), a liquid crystal display (LCD), a light-emitting diode (LED), an organic LED (OLED), or a plasma display panel (PDP) which can display information.

The control module 520 determines whether the user is authorized to access the control server based on the user information received by the input module 510. Specifically, the control module 520 may determine whether the user is authorized to access the control server by determining whether a list of previously registered user information includes the user information received by the input module 510. If the user is authorized to access the control server, the control module 520 may transmit an authentication token to the user terminal. The authentication token may include information that can be recognized by the user terminal, the control server, and a predetermined device. The authentication token may include at least one of expiration time information of the authentication token, the identifier of the user, a session identifier, and attribute information of the user. Therefore, when the user attempts to access the control server with a user terminal, the control module 520 may determine whether the user is authorized to access the control server based on the authentication token. Also, if the user is authorized to access the control server, the control module 520 may provide the user terminal with a web page (or a third party application) for controlling a device by redirecting the web page to the user terminal. Here, the web page may be provided to the user terminal as an HTML browser or as an application.

The installation module 530 installs a predetermined module in the user terminal so that the user can readily access the control server without the need to be subjected to a login procedure. Specifically, as described above, the installation module 530 may install the predetermined module in the user terminal if the user has been successfully authorized to access the control server through a proper authentication procedure (i.e., a login procedure). As a result of the installation of the predetermined module, the user may automatically log on to the control server without requiring an additional login procedure. That is, the user may readily access the control server with a terminal such as a mobile phone without requiring a complicated procedure. Further, the installation module 530 may be optional.

When the user transmits a request message via user terminal to a predetermined device using a web page (or a third party application) provided at the user terminal, the output module 540 transmits the request message to the predetermined device. The output module 540 may transmit the request message to the predetermined device according to whether the authentication token is determined to be valid by the control module 520. Specifically, the user terminal may transmit the authentication token to the control server along with the request message. Then, if the authentication token is valid, the output module 540 may transmit the request message to the predetermined device. If the authentication token is invalid, the output module 540 may transmit to the user terminal a message indicating that the transmission of the request message to the predetermined device has failed. The request message may include a control command regarding the predetermined device and/or a management command for obtaining device information. If the request message includes a control command, the predetermined device may perform an operation according to the control command. If the request message includes a management command for obtaining device information, device information may be read out from the predetermined device, and the device information may be transmitted to the user via the control server.

Specifically, if a web page is provided to the terminal of the user as an XML browser, the user may choose a command for a desired device by clicking a link in the web page. Then, a request message including the chosen command is transmitted to the control server, and the control server searches for a device to which the chosen command is to be transmitted. Thereafter, the control server transmits the request message to the identified device. Here, the control server may transmit the request message to the identified device according to whether an authentication token of the user is valid. The identified device may execute an operation corresponding to the command included in the request message, and transmit a response message regarding the result of the operation to the control server.

The term "module", as used herein, means, but is not limited to, a software or hardware component, such as a Field Programmable Gate-Array (FPGA) or an Application-Specific Integrated Circuit (ASIC), which performs certain tasks. A module may advantageously be configured to reside on the addressable storage medium and configured to be executed on one or more processors. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules.

As described above, according to the exemplary embodiments of the present invention, it is possible to conveniently and securely authenticate a device and to efficiently control and manage a device through a web-based service.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus for controlling a device through a web-based service, the apparatus comprising:
a control module (520) arranged to determine whether a user is authorized to access a control server via a terminal of the user based on information received from the terminal, and to transmit an authentication token to the terminal if it is determined that the user is authorized to access the control server; and
an output module (540) arranged to receive a request message for controlling a device along with the authentication token from the terminal, the request message being transmitted via a third party application by the terminal, and to transmit the request message to the device if the authentication token received from the terminal is valid.

2. The apparatus of claim 1, further comprising an installation module (530) which installs a module in the terminal if the control module (520) determines that the user is authorized to access the control server, the module enabling the user to automatically log on to the control server via the terminal.

3. The apparatus of claim 1 or 2, wherein the authentication token comprises at least one of access right information regarding a right to access the control server, expiration time information of the authentication token, an identifier of the user, a session identifier, and attribute information of the user.

4. The apparatus of claim 1, 2 or 3, wherein the output module (540) transmits the request message to the device using Hypertext Transfer Protocol.

5. The apparatus of claim 1, 2, 3 or 4, wherein the request message includes a management command for obtaining information regarding device.

6. An apparatus for controlling a device through a web-based service, the apparatus comprising:
a control module (520) arranged to determine whether a user is authorized to access a control server via a terminal of the user based on information input received from the terminal, and to transmit an authentication token to the terminal if it is determined that the user is authorized to access the control server; and
an installation module (530) arranged to install a module in the terminal if the control module (520) determines that the user is authorized to access the control server, the module enabling the user to automatically log on to the control server via the terminal.

7. The apparatus of claim 6, further comprising an output module (540) which receives a request message for controlling a device along with the authentication token from the terminal, the request message being transmitted via a third party application by the terminal, and transmits the request message to the device if the authentication token received from the terminal is valid.

8. The apparatus of claim 7, wherein the request message includes a management command for obtaining information regarding device.

9. A method of controlling a device through a web-based service, the method comprising:
determining whether a user is authorized to access a control server via a terminal of the user based on information;
transmitting an authentication token to the terminal if it is determined that the user is authorized to access the control server; and
receiving a request message for controlling a device along with the authentication token from the terminal, the request message being transmitted via a third party application by the terminal; and
transmitting the request message to the device according to if the authentication token received from the terminal is valid.

10. The method of claim 9, further comprising, if it is determined that the user is authorized to access the control server, installing a module in the terminal, the module enabling the user to automatically log on to the control server.

11. The method of claim 9, wherein the authentication token comprises at least one of access right information regarding a right to access the control server, expiration time information of the authentication token, an identifier of the user, a session identifier, and attribute information of the user.

12. The method of claim 9, wherein the transmitting the request message to the device comprises transmitting the request message to the device using the Hypertext Transfer Protocol.

13. The method of claim 9, wherein the request message includes a management command for obtaining information regarding device.
